# EUROPÄISCHE PATENTANMELDUNG

(11) **EP 1 783 417 A2**
(43) Veröffentlichungstag der Anmeldung: **09.05.2007**
(21) Anmeldenummer: 06022197.5
(22) Anmeldetag: 24.10.2006
(51) Int. Cl.: F16L 55/1645, F16L 55/165, F16L 7/02

(54) **Verfahren, Dichtmittel und Anordnung zur Sanierung von Fluid führenden Leitungen**

(30) Priorität: 02.11.2005 DE 102005052119
(71) Anmelder: Copa Umweltservice GmbH, 29633 Munster (DE)
(72) Erfinder: Pagelsen, Rainer, 22043 Hamburg (DE)
(74) Vertreter: Hansen, Jochen

(57) **Zusammenfassung**

Die Erfindung betrifft ein Verfahren zum Sanieren von Fluid führenden Leitungen, insbesondere Abwasserleitungen, mit einer Innenwandung, bei dem in die zu sanierende Leitung ein Liner eingeführt und aufgestellt wird, wobei vor dem Einführen des Liners auf der Innenwandung der zu sanierenden Leitung wenigstens ein Dichtmittel mit einem Trägerelement als aufdehnbare Manschette, die innenseitig und außenseitig quellfähiges Material in je einer geschlossenen Umfangslinie aufweist, aufgebracht wird, wobei das quellfähige Material nach Einführen und Aufstellen des Liners aufquillt und einen Ringraum zwischen Innenwandung und Liner über eine geschlossene Umfangslinie abdichtet, sowie ein Dichtmittel (3) für die Sanierung von Fluid führenden Leitungen (10), insbesondere Abwasserleitungen, mit einem Liner (2), wobei das Dichtmittel (3) ein aufweitbares Trägerelement (32) in Form einer Manschette hat, auf dessen Außenseite (35) ein quellfähiges Dichtungsmaterial (31) aufgebracht ist, wobei zusätzlich auf der Innenseite (36) des Trägerelements (32) ein quellfähiges Material über einen geschlossenen Umfang aufgebracht ist und eine Anordnung für eine mit einem Liner (2) sanierte, Fluid führende Leitung (10).

## Beschreibung

Die Erfindung betrifft ein Verfahren zum Sanieren von Fluid führenden Leitungen, insbesondere Abwasserleitungen, mit einer Innenwandung, bei dem in die zu sanierende Leitung ein Liner eingeführt und aufgestellt wird. Ferner betrifft die Erfindung ein Dichtmittel für die Sanierung von Fluid führenden Leitungen, insbesondere Abwasserleitungen, mit einem Liner, wobei das Dichtmittel ein aufweitbares Trägerelement hat, auf dessen Außenseite ein quellfähiges Dichtungsmaterial aufgebracht ist, sowie eine Anordnung für eine mit einem Liner sanierte, Fluid führende Leitung, insbesondere Abwasserleitung, mit einer Leitung mit Innenwandung und einem darin eingebrachten Liner.

Ein derartiges Verfahren ist beispielsweise in der EP 0 740 102 B1 beschrieben. Unter dem Begriff Liner sind dabei flexible, insbesondere schlauchartige Systeme zu verstehen, die in die zu sanierende Leitung eingeschoben bzw. insbesondere eingezogen werden. Bei den schlauchartigen Linern handelt es sich insbesondere um Polyesterharz getränkte Laminatschläuche, die nach dem Einziehen, bevorzugt mit einer Winde, mit Luft- oder Wasserfüllung aufgebläht, d. h. an die Innenwandung der zu sanierenden Leitung aufgestellt und nachfolgend insbesondere durch Wärmeeinwirkung, z. B. UV-Lichtbestrahlung ausgehärtet werden.

Bei diesem bekannten Sanierungsverfahren besteht einerseits die Schwierigkeit, dass der Liner nicht über den gesamten Anwendungsbereich vollständig an der Innenwandung der zu sanierenden Leitung anliegt und insbesondere nicht überall und dauerhaft mit dieser verbunden ist. Dadurch kann in diesem Ringraum einsickernde Sekundärflüssigkeit entlang diesem Ringraum fließen und ggf. den Liner beeinträchtigen bzw. zerstören. Besondere Problematik ergibt sich an in die Leitung mündenden Zweigleitungen, da hier durch das nachträgliche Aufschneiden des gesetzen Liners für den freien Flüssigkeitsdurchtritt von der einmündenden Zweigleitung in die Hauptleitung erhöhte Gefahr besteht, dass in der Zweigleitung geführte Flüssigkeit unerwünscht in den Ringraum eindringt.

Im Stand der Technik wird daher versucht, durch Einkleidung des Übergangsbereiches von der Zweigleitung in die zu sanierende Leitung diese unerwünschte Migration von Flüssigkeit in den Zwischenraum zwischen Innenwandung der zu sanierenden Leitung und dem Liner zu vermeiden (siehe Ausführungsbeispiel der EP 0 740 102 B1). Zur besseren Anhaftung derartiger Überzüge an Abzweigungen wird in der EP 0 805 301 B1 eine Lösung beschrieben.

Ferner ist aus der DE 93 13 379 U1 eine Vorrichtung zum Abdichten von Undichtigkeitsstellen unterirdisch verlegter Kanalrohre vom Rohrinneren her bekannt, die aufweist einen Dichtring in Form eines aus einem federelastischen Material ringförmig zusammengebogenen Bandes, dessen beide Bandenden sich in Umfangsrichtung überlappen, eine Rastvorrichtung mit wenigstens einer Reihe von Rasten, die in Umfangsrichtung des Dichtringes und in der Nähe des einen Bandendes angeordnet sind und mit wenigstens einem Rastglied zum Eingriff in die Rasten, welches am Ende des anderen gegenüberliegenden Bandendes sitzt, einen Schlauch aus einem gummielastischen Material, welcher den Dichtring vollständig umgibt, und zwei ringsumlaufende Dichtungsbänder aus einem bei Kontakt mit Wasser aufquellenden gummiartigen Werkstoff, welcher auf dem Schlauch neben den Rändern des Dichtringes angeordnet sind. Diese Vorrichtung dient zum Abdichten einzelner Undichtigkeiten in einem Kanalrohr. Für eine Sanierung mit über längere Strecken eingezogene Liner ist diese Vorrichtung nicht geeignet. Nachteilig an der bekannten Vorrichtung ist, dass bei Einsetzen einzelner dieser Dichtringe, jeweilige Absätze im Kanalrohr entstehen, an denen sich Materialanlagerungen und in der Folge Verstopfungen bilden könnten.

Aus der DE 44 01 318 C2 ist eine Vorrichtung und ein Verfahren zum Abdichten von Leckstellen in Rohren vom Rohrinneren her bekannt, bei dem eine aufweitbare Dichtungsmanschette in Form eines aus einem federelastischen Material ringförmig zusammengebogenen, aufweitbaren Bandes, dessen beide Bandenden sich in Umfangsrichtung überlappen, einen die Dichtungsmanschette umgebenden Schlauch sowie endständige an der Außenseite der Dichtungsmanschette angeordnete Dichtungsbänder aufweist. Die Dichtungsmanschette wird durch einen Montierwagen mit Aufweitvorrichtung an der zu sanierenden Leckstelle im Rohr aufgeweitet und gegen die Innenwandung des zu sanierenden Rohres gepresst.

Aus DE 699 16 541 T2 ist eine Auskleidung eines Abzweigrohres und Auskleidungsverfahren bekannt, das bei Einbringen einer Hauptrohrauskleidung (Liner), ein Schäden vermeidendes Aufschneiden an Abzweigrohrauskleidungen erlauben soll.

Aus dem CH 611 994 A5 ist ein Verfahren zur innenseitigen Rohrsanierung mit einem Versetzpacker bekannt. Dabei wird eine mit dem Versetzpacker mitgeführte Folienmanschette von einem zweistufig ausgebildeten Packer zunächst im zentralen Bereich und dann im Randbereich an die Innenwandung der zu sanierenden Rohrleitung verpresst.

Aufgabe der Erfindung ist es, ein Sanierungsverfahren, ein Dichtmittel dafür sowie eine daraus erzeugte Anordnung anzugeben, bei der eine mit einem Liner sanierte Leitung im wesentlichen davor geschützt ist, dass Sekundärflüssigkeit in den Ringraum zwischen Innenwandung der sanierten Leitung und dem Liner migriert.

Gelöst wird diese Aufgabe mit einem Sanierungsverfahren gemäß Anspruch 1, einem Dichtmittel gemäß Anspruch 4 und einer Anordnung gemäß Anspruch 9.

Dadurch, dass vor dem Einführen des Liners auf der Innenwandung der zu sanierenden Leitung wenigstens ein Dichtmittel mit einem Trägerelement als aufdehnbare Manschette, die innenseitig und außenseitig quellfähiges Material in je einer geschlossenen Umfangslinie aufweist, aufgebracht wird, wobei das quellfähige Material nach Einführen und Aufstellen des Liners aufquillt und einen Ringraum zwischen Innenwandung und Liner über eine geschlossene Umfangslinie abdichtet, wird der sich zwischen Liner und Innenwandung der zu sanierenden Leitung bildende Ringraum hydraulisch durch das quellfähige Material, das in einem geschlossenen Umlauf angeordnet ist, in zwei getrennte Teilräume unterteilt. Fließbewegungen etwaiger in diesem Ringraum befindlicher Sekundärflüssigkeit werden somit unterbunden. Selbstverständlich können entlang eines Liners auch mehrere Dichtmittel, beispielsweise in regelmäßigen Abständen, gesetzt werden.

Insbesondere wenn an in die Leitung mündenden Zweigleitungen vor und hinter der Mündung je wenigstens ein Dichtmittel auf der Innenwandung der zu sanierenden Leitung gesetzt werden und nach Einführen und Aufstellen des Liners und Aufquellen der Dichtmittel eine Durchlassöffnung in den Liner an der Mündung der Zweigleitung eingebracht wird, wird der Eintritt von Sekundärflüssigkeit in den Ringraum zwischen Liner und Innenwandung der zu sanierenden Leitung im Bereich von einmündenden Zweigleitungen verhindert. Lediglich im Einmündungsbereich der Zweigleitung in die zu sanierende Leitung kann Flüssigkeit in den durch die wenigstens zwei Dichtmittel, einmal vor der Mündung und einmal hinter der Mündung abgetrennten Teil des Ringraumes eintreten, jedoch nicht in lateraler Richtung weiterströmen. Hydraulisch unerwünschte und gefährliche Sekundärströmungen im nicht vermeidbaren Ringraum zwischen Liner und zu sanierender Leitung können somit auch an sensiblen Einmündungen von Zweigleitungen sicher vermieden werden.

Bevorzugt werden die Dichtmittel mit einem Versetzpacker in der zu sanierenden Leitung durch Aufweiten und Anpressen an die Innenwandung gesetzt. Dabei können die Dichtmittel mit dem Versetzpacker an die gewünschte Stelle zum Anbringen des Dichtmittels in der zu sanierenden Leitung gefahren und dort durch hydraulische oder pneumatische Druckbeaufschlagung des Packers an die Innenwandung der zu sanierenden Leitung angepresst werden.

Als Dichtmittel eignet sich insbesondere eine Vorrichtung mit einem Trägerelement, wie eingehend beschrieben. Dadurch, dass zusätzlich innenseitig des Trägerelements ein quellfähiges Material über einen geschlossenen Umfang aufgebracht ist, wird neben der außenseitigen Abdichtung zwischen Trägerelement und Innenwandung der zu sanierenden Leitung auch innenseitig, also zwischen Trägerelement und Liner eine hydraulische Abdichtung durch das quellfähige Material erreicht. Das Trägerelement dient damit als Träger der in der zu sanierenden Leitung anzubringenden geschlossen umlaufenden, quellfähigen Dichtung. Das Trägerelement erlaubt somit in besonders einfacher Weise die Handhabung des Dichtmittels. Wie vorangehend beschrieben, kann ein Dichtmittel mit Trägerelement in einfacher Weise mit einem Versetzpacker kameraüberwacht präzise an der gewünschten Stelle in der zu sanierenden Leitung gesetzt werden.

Wenn das quellfähige Material feuchtigkeitsreaktiv ist, wird die in derartigen Leitungssystemen, insbesondere Abwasserleitungen vorhandene natürliche Feuchtigkeit für das Auslösen der Aufquellreaktion verwendet. Insbesondere ist das Material auf PU-Basis oder Chloropren-Basis gebildet. Bei derartigen Materialien, die insbesondere auch im Betonbau bei sog. Fugenblech-Systemen mit quellfähiger Randbeschichtung bekannt sind, wird die erwünschte Aufquellreaktion erst nach einigen Stunden erreicht, so dass ausreichend Zeit ist, die verschiedenen Dichtmittelpositionen zu setzen und einen Liner in die zu sanierende Leitung einzuführen, aufzustellen und auszuhärten. Die vorgenannten Materialien erreichen im ausreagierten Zustand eine Quellung von 200 % bis 400 %, bleiben dauerelastisch und behalten den einmal erzielten Anpressdruck. Mit diesen Materialien können somit Unebenheiten an den Innenwandungen der Leitung und spätere kleinere Relativbewegungen zwischen Liner und zu sanierender Leitung, beispielsweise durch unterschiedliche thermische Dehnung, aufgenommen und ausgeglichen werden.

Wenn das Trägerelement eine aufdehnbare Manschette ist, kann das Dichtmittel mittels dieser kurzen zylinderförmigen Manschette lageexakt in der zu sanierenden Leitung gesetzt werden. Inbesondere, wenn die Manschette aus einem umlaufend gebogenen, überlappenden Blechstreifen, bevorzugt aus V4A Edelstahl, besteht, wobei ein Verschluss am Überlappungsbereich vorgesehen ist, der nur eine Aufdehnung der Manschette erlaubt, wird eine einfache Handhabung mit dem Dichtmittel erreicht. Ferner ist das Dichtmittel mit einem Trägerelement aus V4A Edelstahl äußerst korrosionsbeständig und damit langlebig.

Mit Durchführung des erfindungsgemäßen Verfahrens wird eine Anordnung für eine mit einem Liner sanierte, Fluid führende Leitung, insbesondere Abwasserleitung, geschaffen, bei der im Ringraum zwischen Innenwandung und Liner wenigstens ein quellfähiges Material als Dichtmittel angeordnet ist, wobei das quellfähige Material den Ringraum in einer geschlossenen Umfangslinie vollständig ausfüllt.

Bei einer Installation in einem Einmündungsbereich einer Zweigleitung in die zu sanierende Leitung ist dabei wenigstens ein Dichtmittel vor und ein weiteres Dichtmittel hinter dem Mündungsbereich angeordnet, so dass das quellfähige Material den Ringraum in einer geschlossenen Umfangslinie jeweils vollständig ausfüllt und damit den Ringraum zwischen Innenwandung und Liner im Mündungsbereich hydraulisch vollständig von den Ringräumen vor und hinter dem Mündungsbereich trennt.

Nachfolgend wird ein Ausführungsbeispiel des Dichtmittels sowie der mit dem erfindungsgemäßen Verfahren erreichten Anordnung in den anliegenden Zeichnungen dargestellt.

Darin zeigt:
- Fig. 1: eine Anordnung einer mit Liner sanierten Abwasserleitung in einer Schnittdarstellung und
- Fig. 2: ein Dichtmittel mit Trägerelement, in einer räumlichen Ansicht.

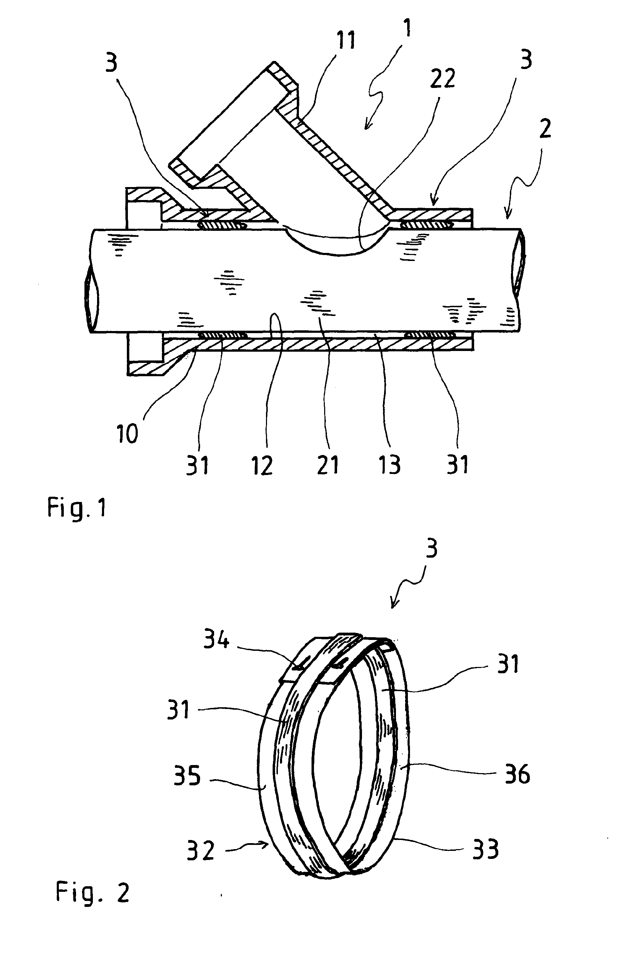

In Fig. 1 ist ein Abschnitt einer Abwasserleitung 10 im Bereich einer Einmündung einer Abzweigleitung 11 in Form eines Kompaktabzweigs 1 dargestellt. In der Abwasserhauptleitung 10 ist ein Liner 2 zur Sanierung dieser Leitung eingebracht. Im Bereich des Abzweigs 1 ist in der Verschneidung der Abzweigleitung 11 mit der Abwasserhauptleitung 10 eine Öffnung 22 in den Liner 2 eingeschnitten, um das über Abzweigleitung 11 zugeführte Abwasser im Liner 2 der sanierten Abwasserhauptleitung 10 aufnehmen zu können.

Vor dem Einziehen des Liners 2 sind an der Innenwandung 12 der zu sanierenden Leitung 10 vor und hinter dem Einmündungsbereich 1 ringsumlaufende Dichtmittel 3 angebracht worden. Die Dichtmittel 3 weisen ein quellfähiges Material 31 auf, das bei Kontakt mit Wasser reagiert und zu einem elastischen Dichtungsring aufquillt.

Vorher wird jedoch der Liner 2 durch Einziehen in die zu sanierende Leitung 10 eingebracht, mittels Druckluftbeaufschlagung aufgestellt und beispielsweise durch UV-Lichtbestrahlung in der aufgestellten, gewünschten Form ausgehärtet. Der Liner 2 ist somit mit seiner Außenseite 21 dicht anliegend an der Innenwandung 12 der zu sanierenden Leitung 10 angeordnet. Jedoch kann über den gesamten zu sanierenden Bereich eine dauerhafte Verbindung zwischen Lineraußenseite 21 und Innenwandung 12 nicht gewährleistet werden. Es bildet sich also ein kleiner Ringraum 13 zwischen der Außenseite 21 des Liners 2 und der Innenwandung 12 der Abwasserleitung 10. In Fig. 1 ist dieser Ringraum 13 zur besseren Darstellbarkeit vergleichsweise breit gezeichnet. Um eine unerwünschte Strömung von Sekundärflüssigkeit durch diesen Ringraum 13 zu unterbinden, sind deshalb vor und hinter dem Einmündungsbereich 1 je ein Dichtmittel 3 gesetzt.

In der in Fig. 1 dargestellten Anordnung des sanierten Rohres ist das quellfähige Material 31 der Dichtmittel 3 bereits aufgequollen und ausreagiert. Das quellfähige Material 31 bildet somit einen ringsumlaufenden Dichtungsring, der den Ringraum 13 zwischen Außenseite 21 des Liners 2 und Innenwandung 12 der Leitung 10 abdichtet. Beim Ausreagieren des quellfähigen Materials 31 zwischen dem Liner 2 und der Leitung 10 wird aufgrund des Aufquellens und der festen Gegenlagerung von einerseits der Innenwandung 12 der Leitung 10 und andererseits der Außenseite 21 des Liners 2 nach dessen Aushärtung ein hoher Anpressdruck erreicht, womit Unebenheiten in der Leitung 10, Relativbewegungen zwischen Liner 2 und Leitung 10 sowie sonstige Beanspruchungen dauerhaft ausgeglichen werden können.

In Fig. 2 ist ein Dichtmittel 3 mit einem Trägerelement 32 in räumlicher Ansicht dargestellt. Das Trägerelement 32 ist als Manschette ausgebildet. Die Manschette 32 besteht aus einem umlaufend gebogenen, überlappenden Blechstreifen 33 aus V4A Edelstahl. Im Überlappungsbereich des Blechstreifens 33 ist ein Verschluss 34 angeordnet, der nur eine Aufdehnung der Manschette 32 erlaubt. Auf der äußeren Umfangsfläche 35 der Manschette 32 sowie auf der inneren Umfangsfläche 36 der Manschette 32 sind je ein geschlossen umlaufender Streifen des quellfähigen Materials 31 aufgebracht.

Diese Manschette 32 kann mit einem Versetzpacker von einem Zugriffspunkt, beispielsweise Revisionsschacht, in die zu sanierende Leitung 10 eingefahren werden. Mit Kameraüberwachung kann dann die optimale Setzposition für die Manschette 32 ausgewählt werden und die Manschette durch Druckbeaufschlagung des Packers geweitet und an die Innenwandung 12 der Leitung 10 angepresst werden. Beim Weiten der Manschette 32 rutschen die überlappend angeordneten Enden des Blechstreifens 33 geführt und begrenzt vom Verschluss 34 den Umfang der Manschette 32 erweiternd übereinander entlang. Bei vollständiger Weitung, also Anlage an die Innenwandung 12 der Leitung 10 bleibt die letzterreichte Rastung des Verschlusses 34 im Eingriff, so dass dann nach Druckentlastung die Manschette 32 festliegt und der Versetzpacker wieder aus der Leitung 10 herausgefahren werden kann.

Diese Setzvorgänge werden entsprechend der gewünschten Anzahl und räumlicher Beabstandung der Dichtmittel 3 in dem zu sanierenden Leitungsabschnitt nacheinander von der entferntesten bis zur nächsten Position gesetzt.

Anschließend wird der Liner 2 in Form eines Polyesterharz getränkten Gewebeschlauches eingezogen, aufgestellt und ausgehärtet. Nach dem Aushärten des aufgestellten Liners 2 beginnt das Aufquellen des Dichtungsmaterials 31 durch Aufnahme von Wasser/Feuchtigkeit aus der Umgebung. Nach der Ausreaktion ist die gewünschte dauerhafte Abdichtung des Ringraumes sichergestellt.

### Bezugszeichenliste

- 1: Einmündungsbereich, Abzweig
- 10: Leitung, Abwasser(haupt)leitung
- 11: Abzweigleitung
- 12: Innenwandung
- 13: Ringraum

- 2: Liner
- 21: Außenseite
- 2: Öffnung

- 3: Dichtmittel
- 31: quellfähiges (Dichtungs-)Material
- 32: Trägerelement, Manschette
- 33: Blechstreifen
- 34: Verschluss
- 35: Außenseite, äußere Umfangsfläche
- 36: Innenseite, innere Umfangsfläche

## Patentansprüche

1. Verfahren zum Sanieren von Fluid führenden Leitungen, insbesondere Abwasserleitungen, mit einer Innenwandung, bei dem in die zu sanierende Leitung ein Liner eingeführt und aufgestellt wird, **dadurch gekennzeichnet, dass** vor dem Einführen des Liners auf der Innenwandung der zu sanierenden Leitung wenigstens ein Dichtmittel mit einem Trägerelement als aufdehnbare Manschette, die innenseitig und außenseitig quellfähiges Material in je einer geschlossenen Umfangslinie aufweist, aufgebracht wird, wobei das quellfähige Material nach Einführen und Aufstellen des Liners aufquillt und einen Ringraum zwischen Innenwandung und Liner über eine geschlossene Umfangslinie abdichtet.

2. Verfahren nach Anspruch 1, **dadurch gekennzeichnet, dass** an in die Leitung mündenden Zweig leitungen vor und hinter der Mündung je wenigstens ein Dichtmittel auf der Innenwandung der zu sanierenden Leitung gesetzt werden und nach Einführen und Aufstellen des Liners und Aufquellen des quellfähigen Materials der Dichtmittel eine Durchlassöffnung in den Liner an der Mündung der Zweigleitung eingebracht wird.

3. Verfahren nach Anspruch 1 oder 2, **dadurch gekennzeichnet, dass** die Dichtmittel mit einem Versetzpacker in der zu sanierenden Leitung durch Aufweiten und Anpressen an die Innenwandung gesetzt werden.

4. Dichtmittel (3) für die Sanierung von Fluid führenden Leitungen (10), insbesondere Abwasserleitungen, mit einem Liner (2), insbesondere als Dichtmittel (3) für ein Verfahren nach einem der vorangehenden Ansprüche, wobei das Dichtmittel (3) ein aufweitbares Trägerelement (32) in Form einer Manschette hat, auf dessen Außenseite (35) ein quellfähiges Dichtungsmaterial (31) aufgebracht ist, **dadurch gekennzeichnet, dass** zusätzlich auf der Innenseite (36) des Trägerelements (32) ein quellfähiges Material über einen geschlossenen Umfang aufgebracht ist.

5. Dichtmittel nach Anspruch 4, **dadurch gekennzeichnet, dass** die Manschette aus einem umlaufend gebogenen, überlappenden Blechstreifen, bevorzugt aus V4A Edelstahl, besteht, wobei ein Verschluss am Überlappungsbereich vorgesehen ist, der nur eine Aufdehnung der Manschette erlaubt.

6. Dichtmittel nach Anspruch 4 oder 5, **dadurch gekennzeichnet, dass** das quellfähige Material (31) feuchtigkeitsreaktiv ist.

7. Dichtmittel nach Anspruch 6, **dadurch gekennzeichnet, dass** das Material (31) auf PU-Basis oder Chloropren-Basis gebildet ist.

8. Anordnung für eine mit einem Liner (2) sanierte, Fluid führende Leitung (10), insbesondere Abwasserleitung, mit einer Leitung (10) mit Innenwandung (12) und einem darin eingebrachten Liner (2), **dadurch gekennzeichnet, dass** im Ringraum (13) zwischen Innenwandung (12) und Liner (2) wenigstens ein Dichtmittel (3) gemäß einem der Ansprüche 4 bis 7 angeordnet ist, wobei das quellfähige Material (31) innenseitig und außenseitig der aufdehnbaren Manschette den Ringraum (13) in je einer geschlossenen Umfangslinie vollständig ausfüllt.

9. Anordnung nach Anspruch 9, wobei in einem Einmündungsbereich (1) eine in die Leitung (10) mündende Zweigleitung (11) vorgesehen ist, **dadurch gekennzeichnet, dass** je wenigstens ein Dichtmittel (3) gemäß einem der Ansprüche 4 bis 7, im Ringraum (13) zwischen Innenwandung (12) und Liner (2) vor und hinter dem Mündungsbereich (1) angeordnet sind, wobei das quellfähige Material (31) innenseitig und außenseitig der aufdehnbaren Manschette den Ringraum (13) in einer geschlossenen Umfangslinie jeweils vollständig ausfüllt.
